# EUROPÄISCHE PATENTSCHRIFT

(11) **EP 2 491 530 B1**
(45) Veröffentlichungstag und Bekanntmachung des Hinweises auf die Patenterteilung: **26.06.2019**
(21) Anmeldenummer: 10752839.0
(22) Anmeldetag: 16.09.2010
(51) Int. Cl.: G06T 7/246, G06T 7/33, G06T 7/73

(54) **BESTIMMUNG DER POSE EINER KAMERA**
DETERMINING THE POSE OF A CAMERA
DÉTERMINER LA POSE D'UNE CAMÉRA

(30) Priorität: 19.10.2009 DE 102009049849
(43) Veröffentlichungstag der Anmeldung: 29.08.2012
(60) Teilanmeldung: 19175398.7
(73) Patentinhaber: Apple Inc., Cupertino CA 95014 (US)
(72) Erfinder: MEIER, Peter, 80634 München (DE)
(74) Vertreter: Lang, Johannes
(86) Internationale Anmeldenummer: PCT/EP2010/063589
(87) Internationale Veröffentlichungsnummer: WO 2011/047924

(56) Entgegenhaltungen:
- EP-A1- 1 544 795
- US-A1- 2004 267 682
- US-A1- 2008 109 184
- ZHIYING ZHOU ET AL: "Robust Pose Estimation for Outdoor Mixed Reality with Sensor Fusion", 19. Juli 2009 (2009-07-19), UNIVERSAL ACCESS IN HUMAN-COMPUTER INTERACTION. APPLICATIONS AND SERVICES, SPRINGER BERLIN HEIDELBERG, BERLIN, HEIDELBERG, PAGE(S) 281 - 289, XP019122846, ISBN: 978-3-642-02712-3 das ganze Dokument
- WIXSON L ET AL: "Improved illumination assessment for vision-based traffic monitoring", 1. Januar 1997 (1997-01-01), VISUAL SURVEILLANCE, 1998. PROCEEDINGS., 1998 IEEE WORKSHOP ON BOMBAY, INDIA 2 JAN. 1998, LOS ALAMITOS, CA, USA,IEEE COMPUT. SOC, US LNKD- DOI:10.1109/WVS.1998.646018, PAGE(S) 34 - 41, XP010261504, ISBN: 978-0-8186-8320-6 * Zusammenfassung, Abschnitte 1-2 *
- MARK R STEVENS ET AL: "Precise Matching of 3-D Target Models to Multisensor Data", IEEE TRANSACTIONS ON IMAGE PROCESSING, IEEE SERVICE CENTER, PISCATAWAY, NJ, US, Bd. 6, Nr. 1, 1. Januar 1997 (1997-01-01), XP011026102, ISSN: 1057-7149
- BATLLE J ET AL: "A review on strategies for recognizing natural objects in colour images of outdoor scenes", IMAGE AND VISION COMPUTING, ELSEVIER, GUILDFORD, GB, Bd. 18, 1. Januar 2000 (2000-01-01), Seiten 515-530, XP002597605, ISSN: 0262-8856, DOI: DOI:10.1016/S0262-8856(99)00040-2
- CATHALA T ET AL: "Real time simulation tools in the CHORALE workshop", PROCEEDINGS OF THE SPIE, SPIE, BELLINGHAM, VA, US, Bd. 6239, 1. Januar 2006 (2006-01-01), Seiten 62390F-1, XP009143704, ISSN: 0277-786X, DOI: DOI:10.1117/12.665239
- NARASIMHAN S G ET AL: "All the images of an outdoor scene", LECTURE NOTES IN COMPUTER SCIENCE, SPRINGER, DE, Bd. 2352, 1. Januar 2002 (2002-01-01), Seiten 3-13, XP009143710, ISSN: 0302-9743 ISBN: 978-3-540-20779-5
- BERNHARD REITINGER ET AL: "Augmented Reality Scouting for Interactive 3D Reconstruction", VIRTUAL REALITY CONFERENCE, 2007. VR '07. IEEE, IEEE, PI, 1. März 2007 (2007-03-01), Seiten 219-222, XP031080316, ISBN: 978-1-4244-0905-1
- AKBARZADEH A ET AL: "Towards Urban 3D Reconstruction from Video", 3D DATA PROCESSING, VISUALIZATION, AND TRANSMISSION, THIRD INTERNATION AL SYMPOSIUM ON, IEEE, PI, 1. Juni 2006 (2006-06-01), Seiten 1-8, XP031078917, DOI: DOI:10.1109/3DPVT.2006.141 ISBN: 978-0-7695-2825-0

## Beschreibung

Die vorliegende Erfindung betrifft ein Verfahren zur Bestimmung der Pose einer Kamera relativ zu einer realen Umgebung und ein Verfahren zur Erkennung eines Objekts einer realen Umgebung in einem von einer Kamera aufgenommenen Bild. Weiterhin betrifft die Erfindung ein Verfahren zur Erstellung eines Datenmodells, das bestimmt ist, in einem Verfahren zur Bestimmung der Pose einer Kamera relativ zu einem realen Objekt einer realen Umgebung oder in einem Verfahren zur Erkennung eines Objekts einer realen Umgebung mit Daten eines von einer Kamera aufgenommenen Bildes verglichen zu werden.

### Hintergrund der Erfindung

Augmented Reality (AR) ist eine Technologie, welche virtuelle Daten mit der Realität überlagert und somit die Zuordnung von Daten mit der Realität erleichtert. Nach dem Stand der Technik ist der Einsatz beispielsweise mobiler AR-Systeme bereits bekannt. In den vergangenen Jahren haben sich leistungsfähige mobile Geräte (z.B. sogenannte Smartphones) als geeignet für den AR-Einsatz herausgestellt. Sie haben inzwischen vergleichsweise große Farbdisplays, eingebaute Kameras, gute Prozessoren und zusätzliche Sensoren, wie zum Beispiel Orientierungssensoren und GPS. Zusätzlich kann die Position des Gerätes über Funknetze angenähert werden. In der Vergangenheit wurden verschiedene Projekte auf mobilen Geräten mit AR durchgeführt. Dabei wurden zunächst spezielle optische Markierungen eingesetzt, um die Position und Orientierung des Gerätes festzustellen. In letzter Zeit gibt es auch Ansätze das GPS und die Orientierungssensorik modernerer Geräte zu nutzen ([1, 4, 10,15].
[1] AR Wikitude. http://www.mobilizy.com/wikitude.php.
[4] S. Feiner, B. MacIntyre, T. Hollerer, and A. Webster. A touring machine: Prototyping 3d mobile augmented reality systems for exploring the urban environment. In Proceedings of the 1st International Symposium on Wearable Computers, pages 74-81, 1997.
[10] Sekai Camera. http://www.tonchidot.com/product-info.html.
[14] Marko Heinrich, Bruce H. Thomas, Stefan Mueller, "ARWeather ," Mixed and Augmented Reality, IEEE / ACM International Symposium on, pp. 187-188, 2008 7th IEEE/ACM International Symposium on Mixed and Augmented Reality, 2008.
[15] layar.com

Automatische Sichtdistanzabschätzung bei Nebel kennt der Fachmann aus "Automatic fog detection and estimation of visibility distance through use of an onboard camera", Nicolas Hautiere, Jean-Philippe Tarel, Jean Lavenant, Didier Aubert, Zeitschrift Machine Vision and Applications Verlag Springer Berlin / Heidelberg ISSN 0932-8092 (Print) 1432-1769 (Online) Heft Volume 17, Number 1 / April 2006 Seiten 8-20.

Dabei ist allerdings auffällig, dass die Registrierung, also die Genauigkeit der Überlagerung auf Grund unsicherer Sensordaten verbesserungswürdig ist. Ein Ansatz dazu ist die Verwendung eines hybriden Trackings, welches initiale Posen einer Kamera aus der Kombination von zum Beispiel GPS, Kompass und Gravitationssensoren durch optische Ansätze verbessert. Oft wird sogenanntes "Histogram Equalization" der Bilddaten eingesetzt, um die Anfälligkeit gegenüber schwankenden Lichtverhältnissen zu reduzieren.

Objekterkennung eines realen Objekts in einem von einer Kamera aufgenommenen Bild und Initialisierung von optischen Trackingsystemen zur Bestimmung der Kamerapose relativ zu einer realen Umgebung sind nach dem Stand der Technik bekannt. Allerdings kann die Zuverlässigkeit der Systeme fallweise stark mit sich verändernden Umgebungsbedingungen schwanken. Die Kamerapose ist dabei die Position und Orientierung der Kamera im Raum. Die Realität kann beispielsweise in irgendeiner Form als Datenmodell vorliegen, beispielsweise als 3D-Modell, welches die geometrischen Eigenschaften der Realität oder eines Teils der Realität umschreibt.

In der Druckschrift US 2003/0025714 wird ein System beschrieben, welches mittels Augmented Reality Wetterdaten visualisiert. Druckschrift US 2005/0231419 A1 beschreibt ein AR-System, welches den Luftraum mittels wetterunabhängiger Sensoren erfasst und Luftrauminformationen mittels AR anzeigt. US 2004/0267682 A1 offenbart wie von der Umgebungssitutation abhängige Merkmale zur Objekterkennung ausgewählt werden.

### Zusammenfassung der Erfindung

Ziel der durch die Ansprüche definierten Erfindung ist, in einem Verfahren zur Bestimmung der Pose einer Kamera relativ zu einer realen Umgebung und in einem Verfahren zur Erkennung eines Objekts einer realen Umgebung in einem von einer Kamera aufgenommenen Bild die Erhöhung der Robustheit gegenüber sich ändernden Umweltbedingungen.

In einem ersten Aspekt betrifft die Erfindung ein Verfahren zur Bestimmung der Pose einer Kamera relativ zu einer realen Umgebung, mit folgenden Schritten: Aufnahme wenigstens eines Bildes einer realen Umgebung mittels einer Kamera, wobei das Bild wenigstens einen Teil eines realen Objekts beinhaltet, Bestimmung mindestens eines Parameters einer Umgebungssituation, z.B. bei Aufnahme des Bildes, Durchführen eines Trackingverfahrens, welches Information hinsichtlich Korrespondenzen zwischen Merkmalen, die mit dem realen Objekt assoziiert sind, und entsprechenden Merkmalen des realen Objekts, wie es in dem Bild der realen Umgebung enthalten ist, auswertet, um Rückschlüsse auf die Pose der Kamera zu erhalten, und Durchführen des Trackingverfahrens abhängig von dem mindestens einen Parameter.

In einem weiteren Aspekt betrifft die Erfindung ein Verfahren zur Erkennung eines Objekts einer realen Umgebung in einem von einer Kamera aufgenommenen Bild, mit folgenden Schritten: Aufnahme wenigstens eines Bildes einer realen Umgebung mittels einer Kamera, wobei das Bild wenigstens einen Teil eines realen Objekts beinhaltet, Durchführen eines Bilderkennungsverfahrens, welches Information hinsichtlich der Erkennung des wenigstens einen realen Objekts im Bild liefert, Bestimmung mindestens eines Parameters einer Umgebungssituation, z.B. bei Aufnahme des Bildes, und Durchführen des Bilderkennungsverfahrens abhängig von dem mindestens einen Parameter.

Insbesondere können auf diese Weise die aktuelle Umweltsituation erkannt und die Systeme dynamisch konfiguriert werden. Mittels der angepassten Konfiguration wird die Robustheit gegenüber sich ändernden Umweltbedingungen erhöht.

Gemäß einer Ausführungsform der Erfindung wird zur Bestimmung des mindestens einen Parameters der Umgebungssituation mindestens eine oder mehrere der folgenden Informationen verwendet: Tageszeit; Jahreszeit; Wetter, insbesondere Regen, Bewölkung, Sonne (Sonneneinstrahlung), und Nebel; Mondstand; Schneelage; Belaubung der Bäume; Höhe über dem Meer; öffentliche Veranstaltungen, insbesondere starke Bewegungen; Verkehrslage; Position; Orientierung in einem Weltkoordinatensystem; Histogramm des Bildes; Temperatur; Wartungsschritt. Der mindestens eine Parameter der Umgebungssituation kann insbesondere für eine oder mehrere dieser Zustände oder Situationen kennzeichnend sein.

Einen oftmals großen Einfluss auf die genannten Verfahren zur Objekterkennung und Posenbestimmung haben verschiedene Umgebungsverhältnisse, wie beispielhaft oben aufgeführt. Wenn man diese erkennt, kann man entsprechend darauf reagieren. Eine Reaktion könnte zum Beispiel sein, ein Datenmodell der Umgebung für die meisten Stellungen der Sonne zu erstellen und dies jeweils für Regenwetter und Sonnenwetter durchzuführen. Möchte man nun an einem bestimmten Ort eine Erkennung oder Initialisierung durchführen, kann man zum Beispiel anhand der Uhrzeit/Jahreszeit und der Abfrage von Online-Wetterinformationen ein passendes Datenmodell (wo der Winkel zwischen dem Vektor der Sonneneinstrahlung dem Vektor der errechneten Sonneneinstrahlung möglichst gering ist) laden und damit arbeiten. Allgemein werden also ein oder mehrere Parameter gemessen, simuliert oder bestimmt, die wenigstens einen Teil der Umgebungsverhältnisse beschreiben. Daraus können ein oder mehrere Parameter bestimmt oder abgeleitet werden, welche das Erkennungs- oder Initialisierungssystem die für Objekterkennung bzw. Posenbestimmung konfigurieren.

In einer Ausführungsform der Erfindung wird in dem Trackingverfahren mindestens ein optisches Trackingverfahren verwendet, das abhängig von dem mindestens einen Parameter initialisiert wird.

Zum Beispiel wird mittels des Trackingverfahrens die Pose der Kamera mit einem, zwei, drei, vier, fünf oder sechs Freiheitsgraden bestimmt.

In einer Ausführungsform der Erfindung können in dem Trackingverfahren mehrere Trackingsensoren verwendet werden, die sich hinsichtlich der Sensorart unterscheiden. Beispielsweise wird in dem Trackingverfahren eine Wichtung wenigstens eines der Trackingssensoren abhängig von dem mindestens einen Parameter vorgenommen.

In einer Ausführungsform der Erfindung kann in dem Trackingverfahren auch eine Priorisierung von Verfahrens-Teilschritten abhängig von dem mindestens einen Parameter vorgenommen werden. Es kann aber auch alternativ oder damit in Kombination in einem Verfahren, bei dem ein Datenmodell verwendet wird, das mit Daten des von der Kamera aufgenommenen Bildes verglichen wird, das Datenmodell unter Berücksichtigung des mindestens einen Parameters der aktuellen Umgebungssituation ausgewählt werden. In einer weiteren Ausführungsform wird wenigstens ein Datenmodell verwendet, das mit Daten des Abbilds des realen Objekts in dem Bild der realen Umgebung verglichen wird, wobei der mindestens eine Parameter Einfluss auf die Erstellung und/oder Verwendung des Datenmodells hat.

Beispielsweise beeinflusst der mindestens eine Parameter die Art der Erstellung des Datenmodells, insbesondere die Erstellung von sogenannten Featuredetektoren und - descriptoren. In einer weiteren Ausführungsform wird ein Datenmodell aus einer Anzahl von Einzelmodellen, welche bei dem mindestens einen Parameter (Umgebungssituation) aufgenommen oder durch Simulation erstellt wurden, extrahiert, welches eine Schnittmenge von Informationen enthält, welche in mehreren Umgebungssituationen vorkommen.

Die Erfindung betrifft auch ein Verfahren zur Erstellung eines Datenmodells, das bestimmt ist, in einem Verfahren zur Bestimmung der Pose einer Kamera relativ zu einem realen Objekt einer realen Umgebung oder in einem Verfahren zur Erkennung eines Objekts einer realen Umgebung mit Daten eines von einer Kamera aufgenommenen Bildes verglichen zu werden. Gemäß einem solchen Verfahren wird eine Umgebungssituation festgestellt oder simuliert und mindestens ein Parameter der Umgebungssituation bestimmt. Weiterhin werden ein Datenmodell erstellt, das eine Grundbeschreibung des realen Objekts enthält, verschiedene Umgebungssituationen vorgegeben oder simuliert und für unterschiedliche Umgebungssituationen abhängig von dem jeweiligen mindestens einen Parameter ein jeweiliges angepasstes Datenmodell bereitgestellt (das kann z.B. als direkte Reaktion auf die aktuellen Parameter geschehen oder auf Vorrat, z.B. wenn die meisten Fälle im Voraus simuliert werden sollen).

In einer Ausführungsform ist die Grundbeschreibung ein virtuelles 3D-Modell einer Umgebung.

In einer weiteren Ausführungsform wird ein Datenmodell erstellt, welches eine Schnittmenge von Informationen enthält, welche in mehreren unterschiedlichen Umgebungssituationen vorkommen.

Beispielsweise können bei der Einblendung von virtueller Information in eine Ansicht einer realen Umgebung Wetterdaten berücksichtigt werden, die z.B. über das Internet ("online") abgefragt werden, um den Realitätsgrad von eingeblendeter virtueller Information in Bezug auf die reale Umgebung zu erhöhen und damit die Zuordnung zu verbessern. Hier sind zur Verarbeitung unterschiedliche Komplexitätsgrade vorstellbar. So können z.B. auf Basis der Wetterlage feste Beleuchtungsmodelle oder Materialien vergeben werden (z.B. Texturen), welche der Wetterlage angepasst sind. Zusätzlich oder alternativ können abhängig von Wetterdaten (wie z.B. Bewölkung, Sonneneinstrahlung, etc) und/oder anderen Daten (wie z.B. Uhrzeit, Jahreszeit, etc.) Schattenwürfe oder Lichtverhältnisse berechnet werden (z.B. mit dem Experten bekannten Raytracing-Verfahren).

Weitere vorteilhafte Ausgestaltungen und Ausführungsformen der Erfindung sind in den Unteransprüchen angegeben.

### Kurze Beschreibung der Zeichnungen

Die Erfindung wird im Folgenden anhand der in der Zeichnung dargestellten Figuren näher erläutert.
- Fig. 1: zeigt in einer Draufsicht eine schematische Anordnung von beispielhaften Systemaufbauten in Bezug auf eine reale Umgebung, die verwendbar sind, um ein Verfahren gemäß der Erfindung durchzuführen,
- Fig. 2: zeigt in einer Seitenansicht eine schematische Anordnung eines beispielhaften Systemaufbaus in Bezug auf eine reale Umgebung, der verwendbar sind, um ein Verfahren gemäß der Erfindung durchzuführen,
- Fig. 3: zeigt schematische Beispiele von Datenmodellen für die Bestimmung von Kamerapose oder zur Objekterkennung,
- Fig. 4: zeigt einen beispielhaften Ablauf eines Verfahrens gemäß einer Ausführungsform der Erfindung,
- Fig. 5: zeigt einen beispielhaften Ablauf eines Verfahrens gemäß einer weiteren Ausführungsform der Erfindung,
- Fig. 6: zeigt einen beispielhaften Ablauf eines Verfahrens gemäß einer weiteren Ausführungsform der Erfindung,
- Fig. 7: zeigt einen beispielhaften Ablauf eines Verfahrens gemäß einer weiteren Ausführungsform der Erfindung,
- Fig. 8: zeigt einen beispielhaften Ablauf eines Verfahrens gemäß einer weiteren Ausführungsform der Erfindung,
- Fig. 9: zeigt einen beispielhaften Aufbau einer Datenstruktur gemäß einer Ausführungsform der Erfindung,
- Fig. 10: zeigt einen beispielhaften Parametervektor gemäß einer Ausführungsform der Erfindung,
- Fig. 11: zeigt ungefähre, beispielhafte Werte und eine mögliche Berechnung der Differenz von Aufnahmen gemäß einer Ausführungsform der Erfindung.

### Beschreibung von Ausführungsformen der Erfindung

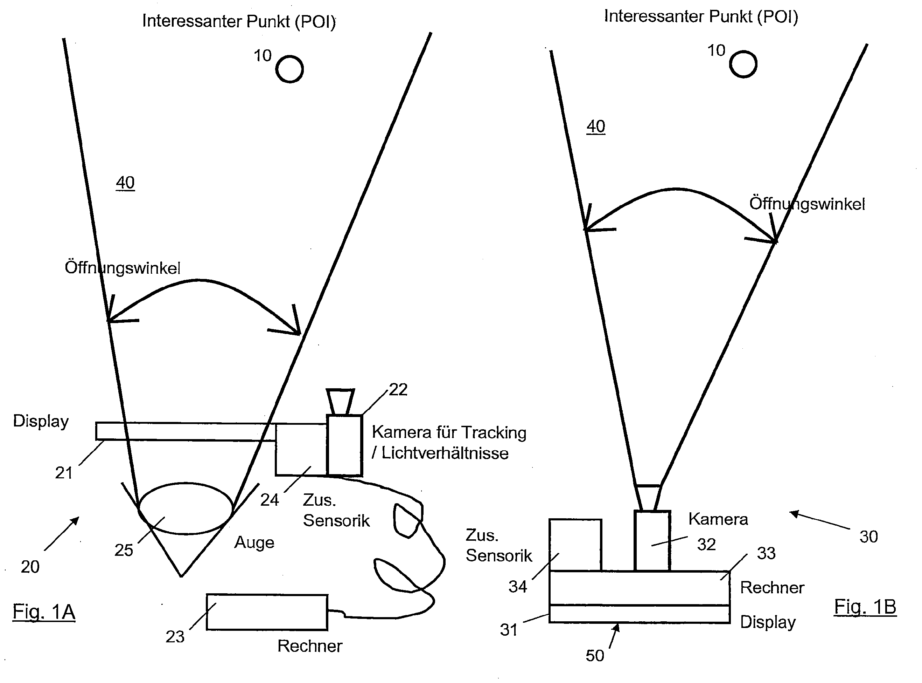

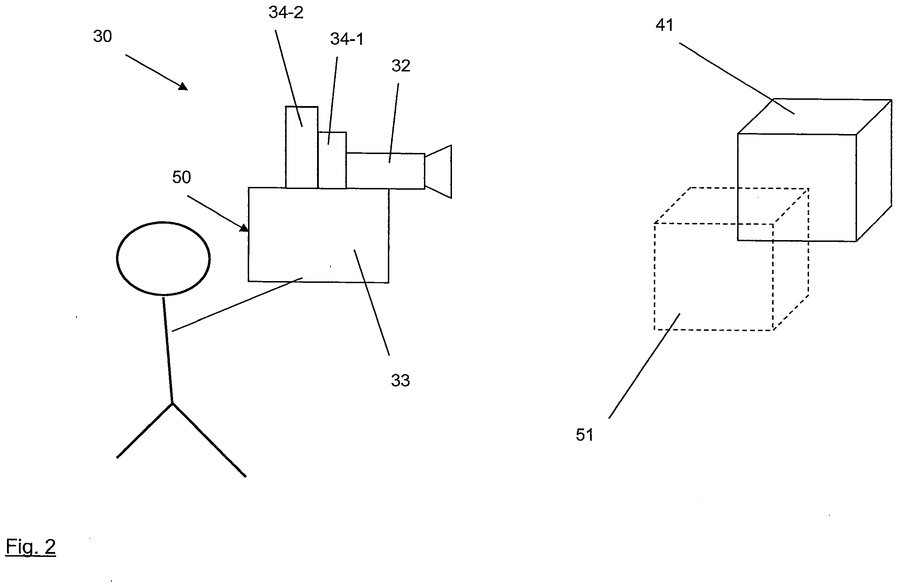

Figur 1 zeigt in einer Draufsicht eine schematische Anordnung von beispielhaften Systemaufbauten in Bezug auf eine reale Umgebung, die verwendbar sind, um ein Verfahren gemäß der Erfindung durchzuführen. Insbesondere zeigt Figur 1 verschiedene Möglichkeiten eines Systemaufbaus. In Verbindung hiermit zeigt Figur 2 in einer Seitenansicht eine schematische Anordnung eines beispielhaften Systemaufbaus in Bezug auf eine reale Umgebung, der verwendbar sind, um ein Verfahren gemäß der Erfindung durchzuführen

In der Darstellung der Fig. 1A trägt der Benutzer als Darstellungsvorrichtung ein kopfgetragenes Bildschirmsystem ("Head Mounted Display", kurz HMD) mit einem Display 21, welches Teil des Systemaufbaus 20 ist. Das Display 21 kann beispielsweise eine allgemein bekannte halbdurchlässige Datenbrille ("Optical See-Through-Display") sein, in die virtuelle Information, bereitgestellt von einem Rechner 23, eingeblendet werden kann. Der Benutzer sieht dann in einer Ansicht auf die reale Welt 40 durch die halbdurchlässige Datenbrille 21 Objekte der realen Welt angereichert mit eingeblendeter virtueller Information (wie etwa POI-Objekten, die mit der realen Welt in Beziehung stehen). Auf diese Art bildet der Systemaufbau 20 eine Ausführungsform eines allgemein bekannten Augmented Realtity (AR) Systems.

An dem Display 21 können zusätzliche Sensoren 24, wie Rotationssensoren, und eine Kamera 22 für optisches Tracking befestigt sein. Das Display 21 kann halbdurchlässig sein oder durch ein Kamerabild mit Bildern der Realität gespeist werden. Ist das Display 21 halbdurchlässig, ist eine Kalibrierung zwischen Auge 25 und Display 21 nötig. Hierzu sind im Stand der Technik verschiedene Verfahren dokumentiert und dem Fachmann bekannt. Vorteilhafterweise am Display 21 oder irgendwo am Körper des Benutzers oder in der Recheneinheit 23 können auch Positionssensoren verbaut sein, wie zum Beispiel GPS-Sensoren (GPS: Global Positioning System), um eine geographische Ortsbestimmung des Systemaufbaus 20 (z.B. nach Längen- und Breitengrad) in der realen Welt 40 zu ermöglichen.

In der Darstellung der Fig. 1B ist ein weiterer, beispielhafter Systemaufbau 30 gezeigt, der z.B. in modernen Mobiltelefonen (sog. "Smartphones") häufig zu finden ist. Die Darstellungsvorrichtung 31 (z.B. in Form eines Bildschirms bzw. Displays), Rechner 33, Sensoren 34 und Kamera 32 bilden eine Systemeinheit, die etwa in einem gemeinsamen Gehäuse eines Mobiltelefons untergebracht ist. Es können mehrere Trackingsensoren verwendet werden, die sich hinsichtlich der Sensorart unterscheiden. Beispielsweise können ein Rotationssensor 34-1 und ein GPS-Sensor 34-2 (vgl. Figur 2) miteinander kombiniert angewandt und ausgewertet werden.

Die Ansicht auf die reale Umgebung 40 wird durch das Display 31 bereitgestellt, welches ein Kamerabild 50 der realen Umgebung 40 darstellt, das von der Kamera 32 aufgenommen wurde. Für Augmented Reality Anwendungen kann das Kamerabild 50 auf dem Display 31 dargestellt und mit zusätzlichen virtuellen Informationen (wie etwa POI-Objekten, die mit der realen Welt in Beziehung stehen) angereichert werden. Auf diese Art bildet der Systemaufbau 30 eine weitere Ausführungsform eines allgemein bekannten Augmented Realtity (AR) Systems.

Grundsätzlich kann diese Erfindung für alle Ausprägungen von AR sinnvoll eingesetzt werden. Zum Beispiel spielt es keine Rolle, ob die Darstellung im sogenannten Optical-See-Through-Verfahren mit halbdurchlässigem HMD oder im Video-See-Through-Verfahren mit Kamera und Bildschirm durchgeführt wird. Grundsätzlich kann die Erfindung auch im Zusammenhang mit stereoskopischen Displays eingesetzt werden, wobei vorteilhafterweise beim Video-See-Through-Ansatz zwei Kameras jeweils einen Videostrom für ein Auge aufnehmen. Auf jeden Fall können die virtuellen 3D-Informationen für jedes Auge individuell gerechnet werden.

Die Abarbeitung der unterschiedlichen, im folgenden beschriebenen Teilschritte kann grundsätzlich auf verschiedene Rechner über Netzwerk verteilt werden. Es ist also eine Client/Server- Architektur oder rein Client-basierte Lösung möglich (bei der zum Beispiel verschiedene Datenmodellalternativen auf dem Client fest vorliegen). Zum Beispiel könnte der Client ein Bild an einen Server senden, welcher auf Basis des Bildes und auf Basis von Parametern zur Umgebungssiuation Aussagen zur 3D-Position und 3D-Orientierung des Systemaufbaus (vgl. Fig. 1) oder eines Teils davon in Relation zur realen Welt (im weiteren Verlauf Pose genannt) und zur Sichtweite dem Client zur Verfügung stellt. Die Parameter zu Umgebungssituation können dabei teilweise vom Client (zum Beispiel Position) und teilweise vom Server (Wetterdaten für diese Position) erfasst werden. Des weiteren kann der Client oder der Server auch mehrere Recheneinheiten, wie mehrere CPUs oder spezialisierte Hardwarekomponenten, wie allgemein bekannte FPGAs, ASICs, GPUs oder DSPs beinhalten. Mehrere Clients können auch untereinander Informationen austauschen, welche zum Beispiel bezüglich der Umgebungssituation an diesem Ort generiert werden oder falls ein Client Umgebungsdaten erzeugt. Dieser Informationsaustausch kann über einen Server stattfinden, es wären aber auch direkte Verbindungen über zum Beispiel Bluetooth oder WLAN denkbar.

Um AR realisieren zu können, wird die Pose (Position und Orientierung) der Kamera im Raum benötigt. Dies kann auf unterschiedlichste Weise realisiert werden. Man kann z.B. nur mit GPS und einem Orientierungssensor mit elektronischem Kompass (wie zum Beispiel in manchen moderneren Mobiltelefonen verbaut) die Pose in der Welt ermitteln. Allerdings ist die Unsicherheit der Pose dann sehr hoch. Daher können auch andere Verfahren, wie zum Beispiel optische Initialisierung und Tracking oder die Kombination optischer Verfahren mit GPS und Orientierungssensoren eingesetzt werden. Es kann auch WLAN-Ortung eingesetzt werden oder RFIDs oder optische Marker können die Lokalisierung unterstützen. Auch hier ist, wie schon erwähnt, ein Client-Server-basierter Ansatz möglich. Grundsätzlich ist diese Erfindung aber nicht nur auf den Einsatz für AR beschränkt. Man kann zum Beispiel auch eine Objekterkennung durchführen und daraufhin eine Website in einem Webbrowser oder eine Anwendung starten. Man kann aber auch den mindestens einen Parameter und das Foto verwenden, um das Bild auf einer Bilder-Seite, wie Flickr, die auch den Aufnahmeort der Bilder mit anzeigen kann, exakt zu positionieren.

Die Erfindung kann die Informationsdarstellung für den Client verbessern. Sie kann aber auch in einem Remote-Szenario eingesetzt werden. Hier sieht zum Beispiel ein Wartungsexperte in einem Kontrollraum das per Datennetz übertragene Bild des Clients und die entsprechend aufbereiteten Informationen auf seinem Bildschirm. Er könnte dann dem Client Anweisungen geben oder nur beobachten. In einem ähnlichen Szenario ist denkbar, dass eine Person aufgenommenes Bild- oder Videomaterial mit erfindungsgemäß dargestellten interaktiven Zusatzinformationen betrachtet und wenn möglich ähnlich der internetbasierten Anwendung "Google Streetview" durch das Material navigieren kann.

Desweiteren kann die Erfindung auch in Fahrzeugen, Luftfahrzeugen oder Schiffen als Monitor, HMD oder mittels eines Head-Up-Displays verbaut oder mitgeführt werden.

Grundsätzlich kann die Erfindung zur Einblendung sogenannter interessanter Punkte eingesetzt werden. Ein interessanter Punkt ("Point of Interest", POI) kann für unterschiedlichste Informationsformen erstellt werden. Es folgen Beispiele. Es können Bilder von Orten mit GPS-Informationen dargestellt werden. Es können Informationen aus dem Internet automatisch extrahiert werden. Dies können zum Beispiel Firmen- oder Restaurant-Websites mit Adressen sein oder Seiten auf denen Bewertungen vorgenommen werden. Es können Nutzer Texte, Bilder oder 3D-Objekte an Orten hinterlegen und anderen zugänglich machen. Es können Informationsseiten, wie zum Beispiel Wikipedia nach Geoinformationen durchsucht werden und die Seiten als POI zugänglich gemacht werden. Es können POIs automatisch aus dem Such- oder Browseverhalten der Nutzer mobiler Geräte erzeugt werden. Es können andere interessante Orte, wie U-Bahnen oder Busstationen, Krankenhäuser, Polizeistationen, Ärzte, Immobilienanzeigen oder Fitnessclubs dargestellt werden.

Es können mittels des Systems auch Navigationsinformationen angezeigt werden (zum Beispiel Pfeile).

Wie in Figur 2 angedeutet, kann die Realität beispielsweise in irgendeiner Form als Datenmodell vorliegen, beispielsweise als 3D-Modell 51, welches hier die geometrischen Eigenschaften eines realen Objekts 41 umschreibt oder Punkt-Features des Objekts in einer 3D-Punktwolke speichert. Ein solches Datenmodell kann somit allgemein die geometrischen Eigenschaften der Realität oder eines Teils der Realität umschreiben. Ein solches Datenmodell kann in einem Trackingverfahren zur Bestimmung der Kamerapose oder in einem Verfahren zur Objekterkennung angewandt werden.

Beispielsweise kann ein Verfahren zur optischen Objektverfolgung unter Verwendung eines solchen Datenmodells durchgeführt werden. Hierbei wird, wie dem Fachmann geläufig ist, ein Datenmodell, wie beispielsweise das Datenmodell 51, mit Daten des von der Kamera aufgenommenen Bildes verglichen, welches das reale Objekt 41 beinhaltet.

Objekterkennung eines realen Objekts in einem von einer Kamera aufgenommenen Bild und Initialisierung von optischen Trackingsystemen zur Bestimmung der Kamerapose relativ zu einer realen Umgebung sind nach dem Stand der Technik bekannt. Insbesondere werden in diesem Zusammenhang Verfahren angewandt, die Information hinsichtlich Korrespondenzen zwischen Merkmalen, die mit dem realen Objekt assoziiert sind, und entsprechenden Merkmalen des realen Objekts, wie es in dem Bild der realen Umgebung enthalten ist, auswerten, um Rückschlüsse auf die Pose der Kamera zu erhalten.

Allerdings kann die Zuverlässigkeit der Systeme fallweise stark mit sich verändernden Umgebungsbedingungen schwanken. Mit Hilfe der Erfindung können die aktuelle Umweltsituation erkannt und die Systeme dynamisch konfiguriert werden. Mittels der angepassten Konfiguration wird die Robustheit gegenüber sich ändernden Umweltbedingungen erhöht.

Gemäß einem Aspekt der Erfindung werden die folgenden Schritte durchgeführt: Aufnahme wenigstens eines Bildes einer realen Umgebung mittels einer Kamera, wobei das Bild wenigstens einen Teil eines realen Objekts beinhaltet, Bestimmung mindestens eines Parameters einer Umgebungssituation, Durchführen eines Trackingverfahrens, welches Information hinsichtlich Korrespondenzen zwischen Merkmalen, die mit dem realen Objekt assoziiert sind, und entsprechenden Merkmalen des realen Objekts, wie es in dem Bild der realen Umgebung enthalten ist, auswertet, um Rückschlüsse auf die Pose der Kamera zu erhalten, und Durchführen des Trackingverfahrens abhängig von dem mindestens einen Parameter, insbesondere Finden von Korrespondenzen bereits abhängig von dem mindestens einen Parameter. Es können also die aktuelle Umweltsituation erkannt und die Systeme dynamisch konfiguriert werden. Mittels der angepassten Konfiguration wird die Robustheit erhöht

Beispielsweise wird in dem Trackingverfahren mindestens ein optisches Trackingverfahren verwendet, das abhängig von dem mindestens einen Parameter initialisiert wird. Mittels des Trackingverfahrens wird die Pose der Kamera z.B. mit einem, zwei, drei, vier, fünf oder sechs Freiheitsgraden bestimmt. Einsatz ist zum Beispiel die Erkennung von Objekten (z.B. zur Gewinnung der Information: "Vor welchem Objekt befinde ich mich") oder die Initialisierung optischer Trackingsysteme für Augmented Reality mit vollen 6 Freiheitsgraden. Zur Ermittlung von 6 Freiheitsgraden ist eine nach dem Stand der Technik bekannte Möglichkeit, 2D- 3D-Korrespondenzen zu erzeugen und in ein Optimierungsverfahren einzugeben. Es können auch 3D-3D-Korrespondenzen verwendet werden, zum Beispiel, wenn das Aufnahmegerät zusätzlich mit einer Tiefenkamera oder einer zweiten Kamera ausgerüstet ist, um Tiefeninformationen zu generieren. Zur Erstellung der Korrespondenzen können Features (Merkmale) aus dem Bild erkannt werden und in einem Datenmodell wiedergefunden werden. Zum Wiederfinden können sogenannte Feature-Descriptoren eingesetzt werden (z.B. SURF oder SIFT). SURF steht für Speeded Up Robust Features, SIFT steht für Scale Invariant Feature Transform). Dies funktioniert aber oft nicht, wenn Features und deren Descriptoren des Datenmodells zu anderen Lichtverhältnissen generiert wurden, als die im aktuellen Bild erkannten Features.

Beispielsweise werden in dem Trackingverfahren mehrere Trackingsensoren verwendet, die sich hinsichtlich der Sensorart unterscheiden. In dem Trackingverfahren kann bei der sogenannten Sensorfusion dann eine Wichtung eines oder mehrerer der Trackingssensoren gegenüber den anderen Trackingsensoren abhängig von dem mindestens einen Parameter vorgenommen werden (z.B. erhöhte Unsicherheit des optischen Trackings bei schlechten Bedingungen). Es kann auch in dem Trackingverfahren eine Priorisierung von Verfahrens-Teilschritten abhängig von dem mindestens einen Parameter vorgenommen werden. Zum Beispiel kann bei guten Verhältnissen zuerst mit schnelleren Ansätzen gearbeitet werden (z.B. SURF) und bei schlechten Verhältnissen zuerst mit robusteren Ansätzen gearbeitet werden (z.B. SIFT).

Oftmals großen Einfluss auf die Verfahren und viele Features haben verschiedene Umgebungsverhältnisse. Wenn man diese erkennt, kann man entsprechend darauf reagieren. Eine Reaktion könnte zum Beispiel sein, ein Modell der Umgebung für die meisten Stellungen der Sonne zu erstellen und dies jeweils für Regenwetter und Sonnenwetter durchzuführen. Möchte man nun an einem bestimmten Ort eine Erkennung oder Initialisierung durchführen, kann man zum Beispiel anhand der Uhrzeit/Jahreszeit und der Abfrage von Online Wetterinformationen ein passendes Modell (wo der Winkel zwischen dem Vektor der Sonneneinstrahlung dem Vektor der errechneten Sonneneinstrahlung möglichst gering ist) laden und damit arbeiten. Es gibt also Parameter, die die Umgebungsverhältnisse beschreiben und Parameter, welche das Erkennungs- oder Initialisierungssystem konfigurieren.

In einer Ausführungsform werden zur Bestimmung des mindestens einen Parameters der Umgebungssituation mindestens eine oder mehrere der folgenden Informationen verwendet: Tageszeit; Jahreszeit; Wetter, insbesondere Regen, Bewölkung, Sonne, und Nebel; Mondstand; Schneelage; Belaubung der Bäume; Höhe über dem Meer; öffentliche Veranstaltungen, insbesondere starke Bewegungen; Verkehrslage; Position; Orientierung in einem Weltkoordinatensystem; Histogramm des Bildes; Temperatur; Wartungsschritt. Der mindestens eine Parameter der Umgebungssituation kann insbesondere für eine oder mehrere dieser Zustände oder Situationen kennzeichnend sein. In einer Ausführungsform ist der mindestens eine Parameter nicht (nur) der Ort oder (nur) für den Ort kennzeichnend. In einer weiteren Ausführungsform ist der mindestens eine Parameter nicht (nur) die Orientierung oder (nur) für die Orientierung kennzeichnend. In einer weiteren Ausführungsform ist der mindestens eine Parameter nicht (nur) die Pose oder (nur) für die Pose kennzeichnend.

Es folgen weitere Beispiele und erfindungsgemäße Möglichkeiten:
Zur Beleuchtungssituation kann auch der Mond berücksichtigt werden. In Mondhellen Nächten kann mit bestimmten optischen Features gearbeitet werden, in dunklen Nächten kann nur noch mit künstlichen Lichtquellen (z.B. Leuchtreklamen) gearbeitet werden oder es wird überhaupt nicht mehr versucht mit dem optischen System, sondern zum Beispiel nur noch mit GPS und Kompass zu arbeiten. Hat es geschneit (aktuelles Wetter oder Wetterdatenbank der letzten Tage und Temperaturverlauf oder Online-Straßenlagenbericht oder Online-Lawinenbericht), ist die Umgebung wiederum anders und es wäre vorteilhaft, ein entsprechendes Modell zu laden oder das optische Tracking abzuschalten.

Abhängig von der Jahreszeit kann man in bestimmten Regionen auf die Belaubung der Bäume schließen und ebenfalls ein anderes Modell laden. Man kann bei der Berechnung zusätzlich zur Jahreszeit auch die klimatischen Verhältnisse des Gesamtjahres berücksichtigen. Hier kann auch die Höhe über dem Meer eine Rolle spielen.

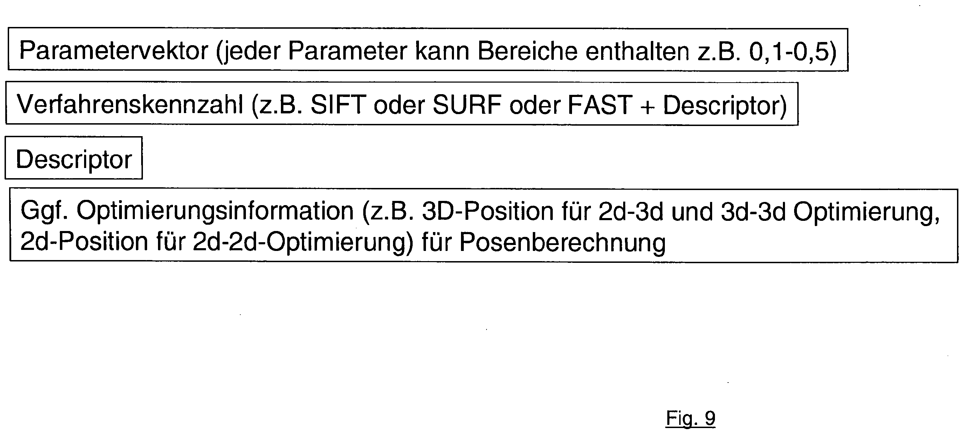

Grundsätzlich kann man, abhängig von der jeweiligen Umgebungssituation, nicht nur unterschiedliche Datenmodelle laden, sondern auch innerhalb eines kombinierten Modells eine Priorisierung (frühe oder späte Berücksichtigung im Algorithmus) oder Gewichtung (starker oder geringer Einfluss auf das Ergebnis) bestimmter Modellteile beeinflussen. In einem kombinierten Modell werden einzelne Modelldaten (wie Punkte einer Punktewolke) mit Daten hinsichtlich Umgebungssituation ergänzt. So können, je nach spezifischer Umgebungssituation, Teile der Modelldaten ausgeblendet, variiert oder hinzugefügt werden. Zum Beispiel werden bestimmte Punkte eines Datenmodells bei Umgebungssituation "Winter" ausgeblendet (d.h. nicht berücksichtigt), bei Umgebungssituation "Sommer" jedoch berücksichtigt. Eine mögliche Datenstruktur für diese mögliche Umsetzung zeigt Fig. 9. Pro Feature könnte das Datenmodell einen Parametervektor enthalten, der beschreibt zu welchen Umweltsituationen das Feature sinnvoll verwendbar ist, einen Descriptor, wie zum Beispiel den SURF-Descriptor, und Optimierungsinformationen zur Berechnung der Pose, wie zum Beispiel die 3D-Position im Erdkoordinatensystem.

Auch ist die Position und die Orientierung der aufnehmenden Kamera für die Bestimmung der Umgebungsverhältnisse oft von großem Einfluss (lokales Wetter, lokale Uhrzeit, etc.). Ausnahme bilden aber Erkennungsvorgänge, die überall auf der Welt stattfinden können (z.B. Erkennung einer Coca-Cola-Flasche) und wo der Client ohne Position auf bestimmte Umgebungseigenschaften reagieren kann (z.B. Helligkeitessensor an mobilen Geräten oder Histogramm des Kamerabildes). Ein Histogramm (eine Art Statistik über das Bild) kann zum Beispiel Hinweise zu den allgemeinen Eigenschaften der Umgebungsbeleuchtung zulassen und ein optisches Verfahren abschalten oder umschalten. Umschalten eines Verfahrens könnte zum Beispiel die Verwendung von Kantenfeatures statt Eck-Features sein, oder die Verwendung des bekannten Verfahrens SIFT anstatt von SURF. Oder der Nutzer kann aufgefordert werden, helfend einzugreifen und dem System Hinweise zur Erkennung zu geben.

Eine weitere Information über die Umgebung könnte zum Beispiel bei einem zu wartenden Gegenstand die Kenntnis des aktuellen Wartungsschrittes bzw. -standes geben. Zum Beispiel die Information, ob der Motor für einen bestimmten Schritt bereits entfernt wurde oder nicht.

Selbst die Kenntnis über öffentliche Veranstaltungen oder die Verkehrssituation (aus Erfahrung oder online abfragbar) könnte Hinweise darüber liefern, dass bestimmte Bereiche keine zuverlässigen Informationen liefern können, weil sie sich ständig in Bewegung befinden (z.B. Menschenmassen oder sich bewegende Fahrzeuge),

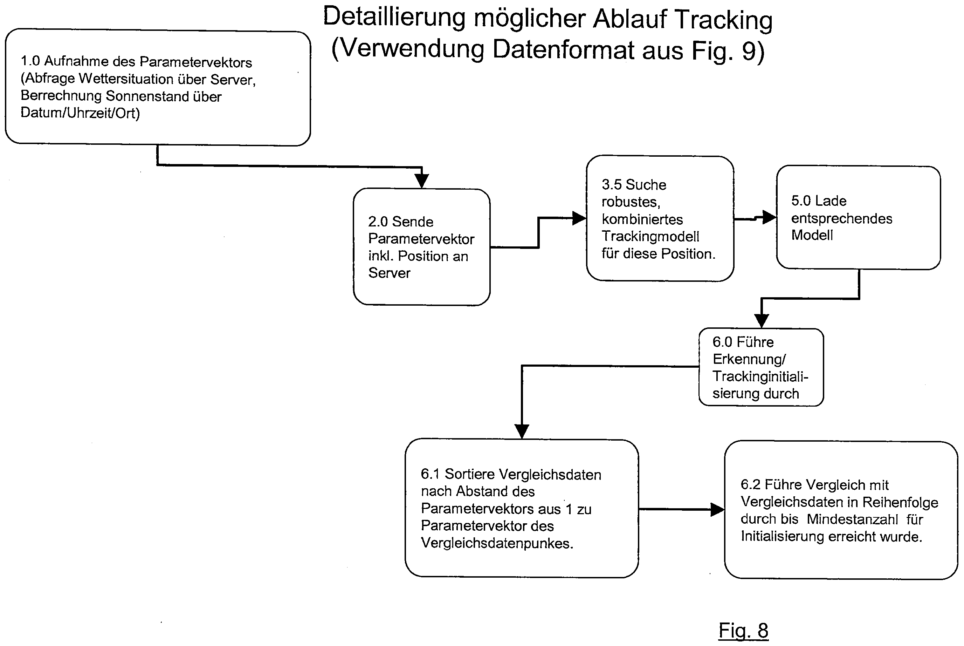

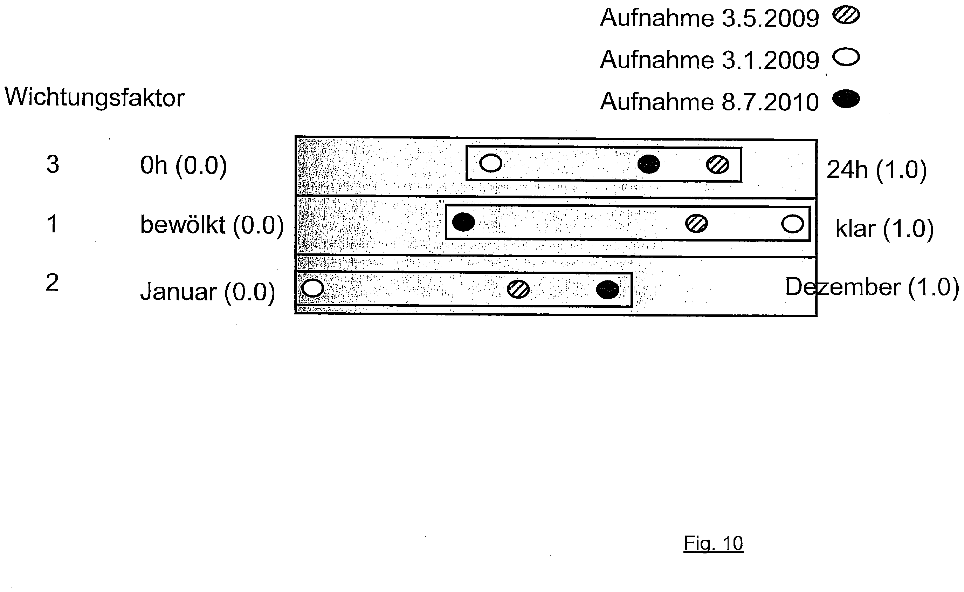

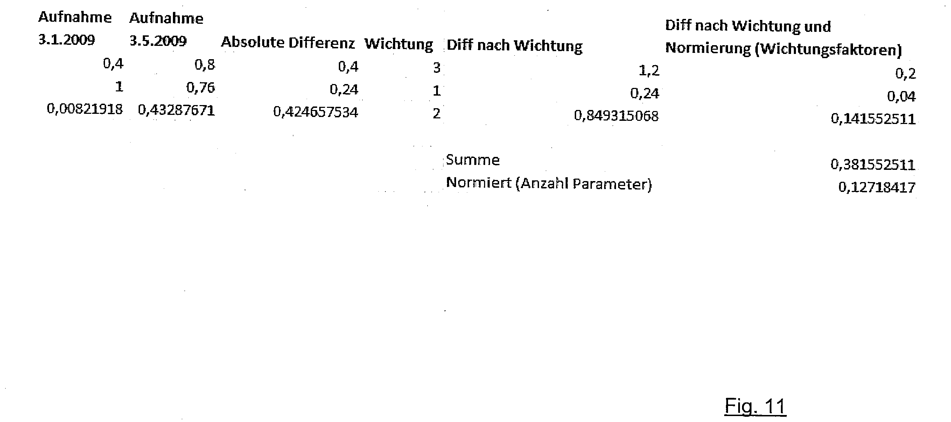

In einer weiteren Ausführungsform wird eine Berechnung einer Unsicherheit bei der Bestimmung der Kamerapose aus der Bestimmung eines Abstandsmaßes des mindestens einen Parameters der Umgebungssituation und bekannter idealer Parameter des Trackingverfahrens zu einer bekannten Umgebungssituation vorgenommen. Allgemein könnte man auch einen Teil mehrerer Parameter über die Umgebungssituation zu einem Vektor zusammenfassen und Datenmodelle mit einem entsprechenden Vektor der Aufnahme- oder Erstellungsbedingungen erzeugen. Aus einem Vergleich der Vektoren könnte man auf die Qualität des vorhandenen Datenmodells für die aktuelle Umgebungssituation schließen und entsprechend das Datenmodell mit der geringsten Abweichung wählen und/oder aus der Differenz eine Unsicherheitsaussage zur Erkennung ableiten. Ein Beispiel hierzu zeigt Fig. 10.: Der Vektor enthält beispielsweise drei Felder für Uhrzeit, Wolkenstand und Jahreszeit. Die Ellipsen zeigen die Umgebungssituation für Aufnahmen, die zu bestimmten Zeiten gemacht wurden. Fig. 11 zeigt ungefähre, beispielhafte Werte und eine mögliche Berechnung der Differenz der Aufnahmen. Dabei ist eine Wichtung der einzelnen Parameter möglich, da diese unterschiedlich starken Einfluss auf das Datenmodell haben können. Der Parametervektor kann pro Datenmodell oder aber auch pro Vergleichsinformation (z.B.SURF-Feature) oder pro Merkmal (Feature) innerhalb des Datenmodells gespeichert werden. Dabei kann nicht nur ein fester Wert, sondern auch ein Parameter-Bereich gespeichert werden, für welchen diese Vergleichsinformation geeignet ist. Figur 8 zeigt den möglichen Einsatz dieser Zusatzinformationen. Zum Beispiel könnte man, wie in Schritt 6.1 und 6.2 beschrieben, durch eine Sortierung nach Parametervektorabstand, den Vergleich beschleunigen, weil man schneller die gewünschte Anzahl der Paare findet. Alternativ könnte man den aktuellen Umgebungsparametervektor allen im Bild gefundenen Features voranstellen und dann einen, optional durch nearest neighbour search untertützen Matchingalgorithmus starten.

In einer Ausführungsform der Erfindung beeinflusst der mindestens eine Parameter Mindestanforderungen an ein erfolgreiches Wiederfinden von Modelldaten, bestimmt insbesondere eine Anzahl von in Übereinstimmung gebrachten Merkmalen, die mit dem realen Objekt assoziiert sind, und entsprechenden Merkmalen des realen Objekts im Bild der realen Umgebung (Anzahl mindestens "gematchter" Features). Bei Erkennung und Initialisierung wird oftmals ein Maß angegeben, ab wann man von einer Wiedererkennung eines Features bzw. Merkmals oder des Gesamtobjekts ausgeht. Zum Beispiel müssen mindestens 10 Features wiedergefunden werden. Ist das vorhandene Modell gut passend zur Umgebung, kann man das Maß z.B. erhöhen (z.B. 20 Features müssen wiedergefunden werden). Damit kann man bei guten Bedingungen die sogenannten "False Positives" (Fehlerkennungen eines Objekts; also das vermeintliche Erkennen eines Objekts durch das System, das sich jedoch als falsch herausstellt) verringern (was zum Beispiel zu einer erhöhten Genauigkeit führen kann), verzichtet bei schlechten Verhältnissen aber nicht auf eine mögliche Initialisierungschance.

In einer weiteren Ausführungsform hat der mindestens eine Parameter der Umgebungssituation Einfluss auf die Erstellung und/oder Verwendung des Datenmodells. Insbesondere beeinflusst der mindestens eine Parameter die Art der Erstellung des Datenmodells, beispielsweise die Detection von Features und die Erstellung von Featuredescriptoren. Insbesondere gibt es unterschiedliche Feature-Extraktoren und -Deskriptoren. Bei guten Umgebungsverhältnissen kann man zum Beispiel schnelle Verfahren wählen (z.B. FAST-Extraktor + einen schnellen Descriptor), während man bei schwierigen Verhältnissen aufwändigere Verfahren verwenden kann (z.B. SIFT).

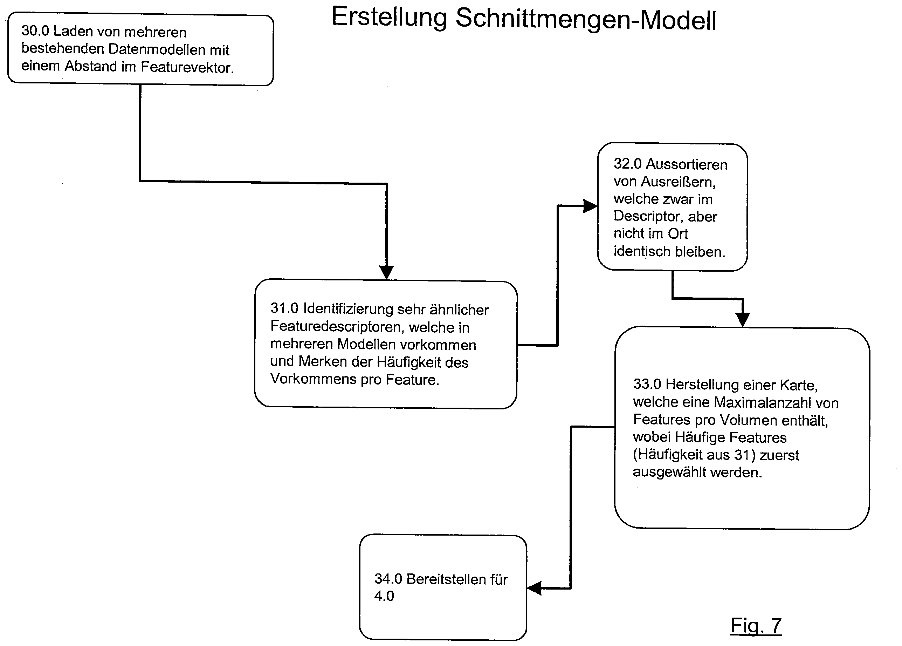

In einer anderen Ausführungsform wird ein Datenmodell aus einer Anzahl von Einzelmodellen extrahiert, wobei das Datenmodell eine Schnittmenge von Informationen enthält, welche in mehreren Umgebungssituationen vorkommen. Das Ablaufdiagram in Fig. 7 zeigt einen beispielhafte Umsetzung dieses Vorgangs. In Schritt 30.0 werden verschiedene bestehende oder zuvor durch Simulation erzeugte Datenmodelle geladen. Danach (Schritt 31.0) wird ein Matching zwischen den Modellen durchgeführt. Dabei werden manche Vergleichsdaten oft wiedergefunden, andere vielleicht keinmal. Die Häufigkeit des Wiederfindens kann zwischengespeichert werden. Im optionalen Schritt 32.0 können Ausreißer entfernt werden, zum Beispiel, wenn ein Feature sehr stark in seiner Position im gemeinsamen Koordinatensystem der Datenmodelle variiert. Es ist anzumerken, dass die Datenmodelle grundsätzlich auch aus heterogenen, durch unterschiedliche Verfahren erzeugten, Vergleichsinformationen bestehen können (zum Beispiel SURF oder SIFT oder einem Kantenmodell oder einem Flächenmodell oder einem Modell welches Farben berücksichtigt). Danach kann man Vergleichsinformationen, welche sehr häufig wiedergefunden wurden (Schritt 31.0) zu einer neuen Karte kombinieren. Hierbei kann man optional auch eine Obergrenze für Vergleichsinformationen z.B. pro Raumvolumen festlegen. Es wird dann nach den stärksten Vergleichsinformationen sortiert. Dabei kann durch eine Wichtung verhindert werden, dass nur sehr robuste, langsame Verfahren bevorzugt werden. Anschließend kann die Karte zur weiteren Verwendung gespeichert werden.

In einer weiteren Ausführungsform führen mehrere Teilsysteme (insbesondere mehrere Clients, wie mehrere mobile Geräte) jeweils das Verfahren aus, wobei nicht jedes der Teilsysteme selbst eine Trackingsituation berechnet, sondern eine fertige Situationsinformation allen Teilsystemen zur Verfügung gestellt wird, vorteilhafterweise sogar ein fertiges Erkennungs- oder Initialisierungsmodell den Teilsystemen zur Verfügung gestellt wird.

Beispielsweise versorgen die Teilsysteme einen vorgesehenen Server oder einen Peer-to-Peer-Prozess selbst kontinuierlich mit Informationen über die Situation. Ein Peer-to-peer-Prozess wäre zwischen mehreren mobilen Geräten selbst (z.B. ein Server teilt einem Gerät Nr. 10 mit, dass das Gerät Nr.13 und Nr. 17 in der Nähe sind und das Gerät Nr. 10 diese Geräte dann direkt nach Informationen fragen kann). In dem anderen Fall versorgen einzelne Geräte den Server mit Informationen, und ein Nutzer holt für sein jeweiliges Gerät die Informationen vom Server.

In einer weiteren Ausführungsform wird durch das Ermitteln der Kamerapose eine Tiefeninformation in Bezug auf wenigstens ein in dem Bild enthaltenes reales Objekt berechnet, wobei die Tiefeninformation verwendet wird, um ein Verdeckungsmodell zur Verdeckung eines realen Objekts in eine Darstellungsvorrichtung einzublenden, wenn eine der realen Umgebung überlagerte virtuelle Information von dem zu verdeckenden realen Objekt in der Ansicht verdeckt wird.

Ein weiterer Aspekt der Erfindung betrifft ein Verfahren zur Erstellung eines Datenmodells, das bestimmt ist, in einem Verfahren zur Bestimmung der Pose einer Kamera relativ zu einem realen Objekt oder in einem Verfahren zur Erkennung eines Objekts einer realen Umgebung mit einem von einer Kamera aufgenommenen Bild bzw. dessen Daten verglichen zu werden, bei dem eine Umgebungssituation festgestellt oder simuliert wird und mindestens ein Parameter der Umgebungssituation bestimmt wird, ein Datenmodell erstellt wird, das eine Grundbeschreibung des realen Objekts enthält, verschiedene Umgebungssituationen vorgegeben oder simuliert werden und für unterschiedliche Umgebungssituationen abhängig von dem jeweiligen mindestens einen Parameter ein jeweiliges angepasstes Datenmodell bereitgestellt wird. Das kann als direkte Reaktion auf aktuelle Parameter geschehen oder auf Vorrat, z.B. wenn die meisten Fälle im Voraus simuliert werden. Eine Idee ist also, statt zum Beispiel mehrere Modelle von unterschiedlichen Situationen aufwändig zu erstellen, ein neutrales Modell zu erstellen und durch Simulation der Umwelteinflüsse dynamisch (oder im Voraus) und wesentlich weniger aufwändig anzupassen.

Zum Beispiel ist die Grundbeschreibung ein virtuelles 3D-Modell einer Umgebung. Zum Beispiel kann man sich vorstellen, ein 3D-Modell einer Stadt zu haben. Nun könnte man versuchen, mittels bekannter sogenannter 3D-Rendertechniken den aktuellen Verlauf der Sonne und das sich daraus ergebende Modell der Umgebung zu berechnen.

Beispielsweise wird das 3D-Modell mit Texturen belegt, welche zuvor von Umgebungssituations-spezifischen Eigenschaften befreit wurde. Während der Sammlung von Informationen können oft Schatten mit aufgenommen werden. Diese könnte man zum Beispiel mit dem Fachmann bekannten Verfahren versuchen zu eliminieren.

In einer Ausführungsform wird das 3D-Modell mit unterschiedlichen Lichtsituationen auf die Bildebene projiziert.

Vorteilhafterweise wird ein Datenmodell erstellt, welches eine Schnittmenge von Informationen enthält, welche in mehreren unterschiedlichen (möglichst vielen) Umgebungssituationen vorkommen. Man könnte sich auch vorstellen, unterschiedlichste Umgebungsmodelle zu generieren (durch Aufnahme oder Simulation) und daraus Merkmale zu extrahieren, welche für die Erkennung / Initialisierung eingesetzt werden. Nun kann man zwischen den Umgebungsmodellen untersuchen, ob bestimmte Merkmale (zum Beispiel ein bestimmtes SURF-Feature) in möglichst vielen unterschiedlichen Modellen vorkommt und damit besonders robuste Merkmale in ein Modell packen, welches bei möglichst vielen Situationen funktioniert. Siehe auch Ausführungen oben zu Figur 7.

In einer Ausführungsform wird ein SLAM-Verfahren mit der Feststellung der aktuellen Umgebungssituation kombiniert und ein erstelltes Datenmodell zusammen mit Informationen zur Umgebungssituation gespeichert. Beim sogenannten Simultaneous Localization and Mapping (SLAM) wird, während sich die Kamera bewegt, oder bei einer Stereokamera oder einem ähnlichen 3D-Ansatz (z.B. einer Tiefenkamera) auch direkt, eine Karte (Datenmodell) der Umgebung erzeugt (z.B. eine Karte aus Surf-Features und deren 3D-Position in der Welt) und die Pose der Kamera bestimmt. Nimmt man dabei noch Daten oder Parameter über die aktuellen Umgebungsverhältnisse auf (wie oben beschrieben), kann man diese Daten verwenden, um ein immer vollständigeren Modellsatz der Welt zu unterschiedlichsten Umgebungsverhältnissen zu generieren. So könnte man mit einem System an einer bestimmten Stelle starten, zu der es bereits umfangreiche Daten gibt und sich von dort fortbewegen. Nun lernt das System neue Bereiche zu bestimmten Konditionen kennen und kann in Zukunft auch dort beginnen.

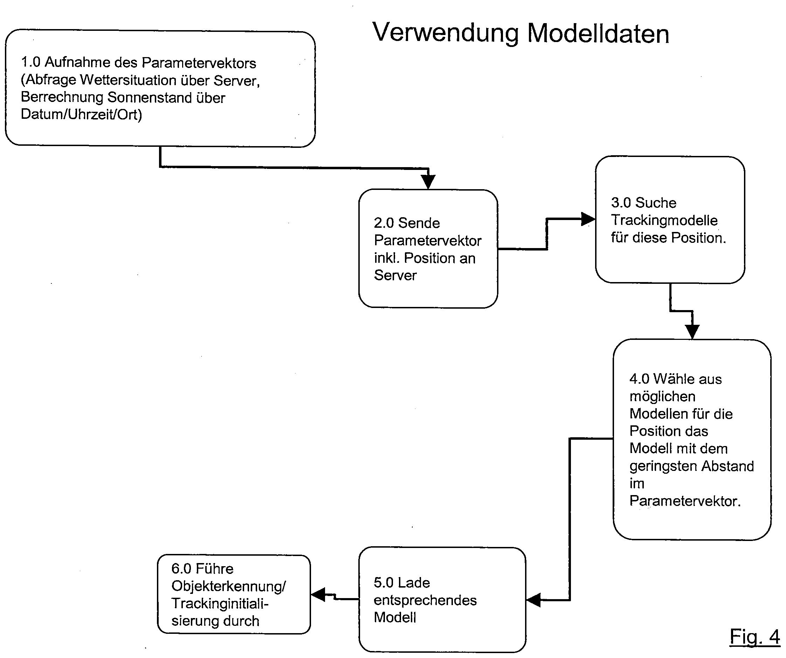

Im Folgenden werden Aspekte und Ausführungsformen der Erfindung anhand der Ablaufdiagramme, die in Figuren 4 bis 8 dargestellt sind, in Verbindung mit den übrigen Figuren näher erläutert.

Figur 4 betrifft zunächst eine Ausführungsform eines erfindungsgemäßen Verfahrens hinsichtlich Verwendung von Modelldaten. In Schritt 1.0 erfolgt eine Aufnahme eines Parametervektors, der im Grunde mindestens einen oder mehrere Parameter über die Umgebungssituation umfasst (z.B. durch Abfrage der Wettersituation über einen zentralen Server, Berechnung Sonnenstand über Datum/Uhrzeit/Ort). In Schritt 2.0 wird der Parametervektor inklusive der Aufnahme-Position an den Server gesandt. In Schritt 3.0 erfolgt eine Suche nach vorhandenen Trackingmodellen für diese Position. Aus möglichen Modellen für diese Position wird in Schritt 4.0 das Modell mit dem geringsten Abstand im Parametervektor ausgewählt. Anschließend wird in Schritt 5.0 das entsprechende Modell geladen. In Schritt 6.0 wird dann, je nach Anwendungsfall, die Objekterkennung im Bild der Kamera bzw. Trackinginitialisierung für die Posenbestimmung der Kamera durchgeführt.

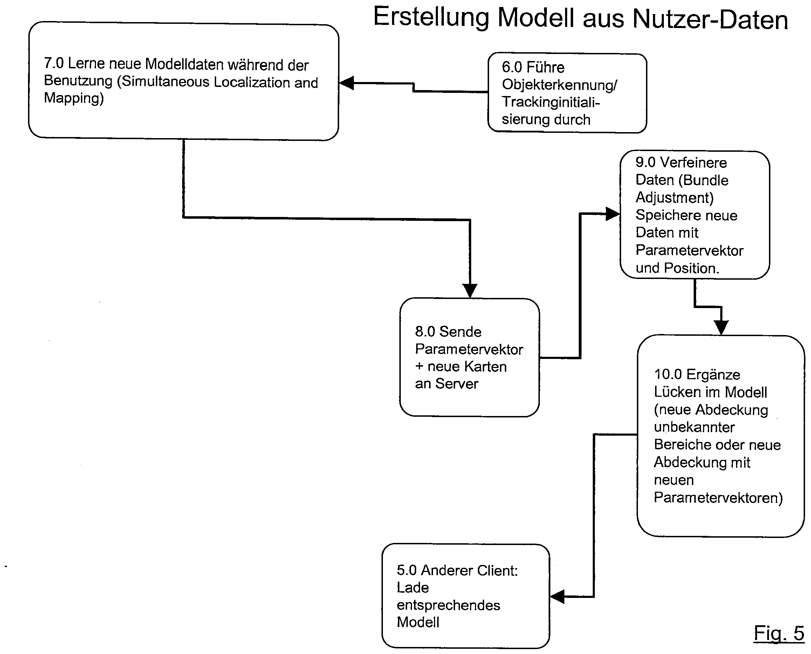

In Figur 5 wird ein beispielhaftes Verfahren ausgeführt, das zur Erstellung eines Datenmodells aus Nutzer-Daten dient. In Schritt 7.0 werden neue Modelldaten während der Benutzung (Simultaneous Localization and Mapping) "gelernt". In Schritt 8.0 werden Parametervektor und neue Karten (Datenmodelle) an den Server gesendet. In Schritt 9.0 erfolgt optional eine Verfeinerung der Daten (sogenanntes "Bundle Adjustment"), wobei die neue Daten mit Parametervektor und Position gespeichert werden.. In Schritt 10.0 werden Lücken im Modell ergänzt (z.B. neue Abdeckung unbekannter Bereiche oder neue Abdeckung mit neuen Parametervektoren). Ein anderer Client kann dann in Schritt 5.0 ein entsprechendes Datenmodell laden, das ein anderer Nutzer zuvor an den Server gesandt hat, wie anhand der Schritte 7.0 bis 10.0 beschrieben. Statt des anderen Clients kann auch der gleiche Nutzer bzw. das gleiche Gerät, welcher bzw. welches das Datenmodell erstellt hat, das Datenmodell z.B. zu einem späteren Zeitpunkt laden.

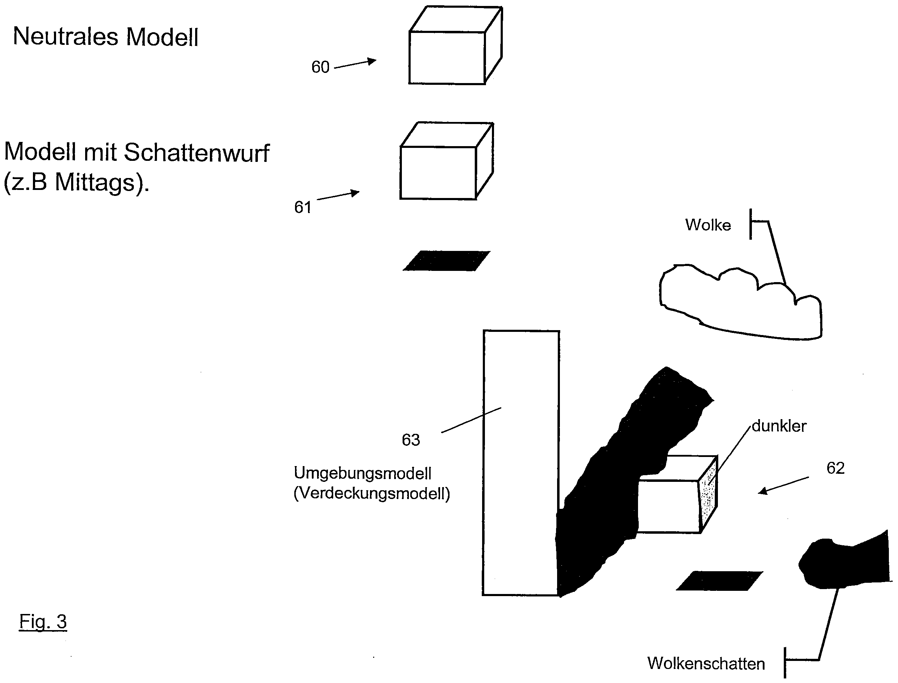

In Figur 3 ist schematisch dargestellt, wie ein Datenmodell für ein Verfahren zur Bestimmung der Kamerapose oder ein Verfahren zur Objekterkennung erstellt werden kann, Es kann von einem neutralen Modell 60 ausgegangen werden, das eine Grundbeschreibung des realen Objekts (vgl. Objekt 41 der Fig. 2) enthält. Anschließend werden verschiedene Umgebungssituationen vorgegeben oder simuliert, z.B. Sonneneinstrahlung von oben. Für die unterschiedlichen Umgebungssituationen wird abhängig von dem jeweiligen mindestens einen Parameter ein jeweiliges angepasstes Datenmodell bereitgestellt, z.B. die angepassten Datenmodelle 61 und 62 der Figur 3, welche jeweils Schattenwürfe abhängig von der Umgebungssituation berücksichtigen. Aus den Datenmodellen 61 und 62 kann vorteilhafterweise zusätzlich direkt eine etwas kompaktere Form eines Datenmodells hergestellt werden, welche aus einer Sammlung vorbereiteter Vergleichsdaten, zum Beispiel einer Punkt-Feature-Wolke besteht. Das Datenmodell 62 zeigt beispielhaft, dass man die Realitätsnähe des erzeugten Datenmodells durch weitere Maßnahmen noch erhöhen kann. So wird das Modell 62 nicht nur durch die Verdeckung weiterer bekannter Objekte der Umgebung durch Schattenwurf beeinträchtigt, sondern es kann auch die aktuelle Bewölkungssituation, zum Beispiel durch Abfrage eines aktuellen Regenradarbildes einbezogen werden.

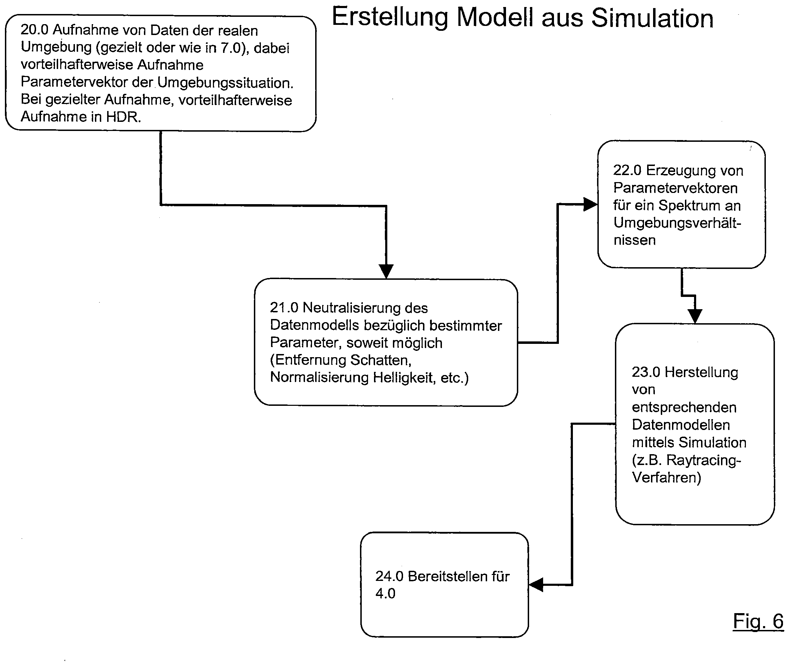

Fig. 6 zeigt einen beispielhaften Ablauf eines Verfahrens gemäß einer weiteren Ausführungsform der Erfindung. In Schritt 20.0 werden Daten der realen Umgebung (gezielt oder wie in Schritt 7.0) aufgenommen, dabei vorteilhafterweise ein Parametervektor der Umgebungssituation aufgenommen. Bei gezielter Aufnahme erfolgt vorteilhafterweise Aufnahme in HDR (sogenanntes "High Dynamic Range"). In Schritt 21.0 erfolgt eine Neutralisierung des Datenmodells bezüglich bestimmter Parameter, soweit möglich (z.B. Entfernung von Schatten, Normalisierung der Helligkeit, etc.). In Schritt 22.0 erfolgt eine Erzeugung von Parametervektoren für ein Spektrum an Umgebungsverhältnissen. Darüber hinaus können in Schritt 23.0 entsprechende Datenmodelle mittels Simulation (z.B. Raytracing-Verfahren) hergestellt werden. In Schritt 24.0 erfolgt ein Bereitstellen für den Schritt 4.0 gemäß Figur 4.

Um den Realitätsgrad zu erhöhen und damit die Zuordnung zu verbessern, können vorteilhafterweise Wetterdaten online abgefragt werden. Hier sind zur Verarbeitung unterschiedliche Komplexitätsgrade vorstellbar. So können auf Basis der Wetterlage (zum Beispiel entsprechend des Google-Wetterdienstes "meistens bewölkt", "vereinzelt stürmisch", "vereinzelt Regen", etc.) feste Beleuchtungsmodelle oder Materialien vergeben werden (z.B. Texturen), welche der Wetterlage angepasst sind. Man könnte im höchsten Komplexitätsgrad jedoch auch ein aktuelles Wolken- oder Regensatelliten- oder Radarbild verwenden, um dynamisch ein angenähertes Modell der Wolkendecke zu erstellen und die Schattenwürfe und optional die detaillierten Lichtverhältnisse daraus berechnen (siehe auch Figur 3). Wie bereits erwähnt, kann dies durch einen Server durchgeführt werden, welcher die Daten dem Client ortsspezifisch zur Verfügung stellt. Ebenfalls hilfreich für die Wahrnehmung der Entfernung ist die Ermittlung der Sichtweite durch Nebel, Regen oder Dunst. Diese kann automatisch erfolgen (vgl. "From video image e.g. (Automatic Fog Detection and Estimation of Visibility Distance through use of an Onboard Camera)", Zeitschrift Machine Vision and Applications Verlag Springer Berlin / Heidelberg ISSN 0932-8092 (Print) 1432-1769 (Online) Heft Volume 17, Number 1 / April 2006, Seiten 8-20) oder ebenfalls mittels aktueller Wetterdaten abgefragt werden.

Einfachste technische Umsetzung, neben weiteren bekannten, ist das Setzen der Nebel-Einstellungen in OpenGL. Es kann zusätzlich noch auf Grund der Position, des Datums und der Uhrzeit der Stand der Sonne, bzw. des Mondes berechnet werden und zur Einstellung der Lichtquellen gesetzt werden. Dies wirkt sich insbesondere auf die Schatten (vgl. Figur 3) aus, die dem Menschen helfen, die Position eines virtuellen Objekts (z.B. POI) besser zu bestimmen. Die Schatten können vorberechnete Texturen sein (vorteilhafterweise mit einem Transparenzwert), die sich, je nach Stand der Sonne oder des Mondes, unterhalb des POI auf der Bodenebene befinden, wo die Gerade zwischen Sonne oder Mond und POI die Bodenebene schneidet (Ausnahmen, falls dies nicht der Fall ist). Sollten Sonne oder Mond gleichzeitig sichtbar sein, wird die Sonne zur Berechnung verwendet.

Die Schatten können aber auch, wie nach dem Stand der Technik bekannt, dynamisch berechnet werden. Dies kann vorteilhafterweise das gegenseitige Beschatten von POIs beinhalten. Existiert ein 3D-Modell der Umgebung (z.B. in Form eines Verdeckungsmodells 63 zur Verdeckung eines realen Objekts; sogenannte "Occlusiongeometrie" in Figur 3) kann dies zusätzlich zur realistischen Berechnung der Schattensituation eingesetzt werden, indem es zum Beispiel Schatten auf POIs wirft (siehe auch Figur 3). Es kann der Realitätsgrad der Einblendung zusätzlich erhöht werden, indem die Materialien durch Bilder der Umgebung des POI angereichert werden. Der Einsatz von sogenannten Environment-Maps (Umgebungskarten) ist dem Fachmann bekannt.

Es kann ein weiterer wichtiger Schritt unternommen werden, um die Qualität des Datenmodells abhängig vom Parameter Ort und Orientierung der Kamera zu stärken. Durch das Laden von Verdeckungsmodellen (sogenannte "Occlusiongeometrie") kann festgestellt werden, ob ein Vergleichdaten für die Kamera sichtbar sind, oder zum Beispiel hinter einem anderen Gebäude verschwinden. Das Tiefenmodell kann hinterlegt werden oder dynamisch mittels SLAM-Algorithmen, Stereokameras oder einer Time Of Flight-Kamera erzeugt werden. In diesem Fall ist eine Tiefeninformation pro Vergleichsdatensatz (z.B. ein SIFT-Feature) ausreichend. In einem weiteren Schritt werden für eine korrekte Überlagerung im Nahbereich die Kameraparameter generiert (dies muss nicht ständig erfolgen). Diese können dynamisch zum Beispiel mittels eines SLAM-Mechanismus erzeugt werden oder entsprechend des Gerätenamens vom Server abgerufen werden oder im Programm hinterlegt sein.

Nun kann, abhängig von den Hardwarefähigkeiten des Systems alles dargestellt und gerechnet werden. Ist die Hardware des Systems schwach, kann die Berechnung der korrekten Materialoberflächen auch auf Serverseite erfolgen oder das Gesamtbild auf Serverseite berechnet werden. Bei einem starken System, kann eine moderne GPU (Graphic Processor Unit) einen großen Teil der Arbeit übernehmen. Hierzu sind dem Fachmann vielerlei Möglichkeiten bekannt.

Durch das Ermitteln der Position und Orientierung der Kamera relativ zu der realen Umgebung kann eine Tiefeninformation in Bezug auf wenigstens ein in der Ansicht enthaltenes reales Objekt berechnet werden, wobei die Tiefeninformation verwendet werden kann, um ein Verdeckungsmodell zur Verdeckung eines realen Objekts in die Darstellungsvorrichtung einzublenden, wenn eine virtuelle Information von dem zu verdeckenden realen Objekt in der Ansicht verdeckt wird.

## Patentansprüche

1. Verfahren zur Bestimmung einer Pose einer Kamera (22, 32) relativ zu einer realen Umgebung (40), mit folgenden Schritten:
- Empfangen eines Bildes (50) der realen Umgebung von der Kamera (22, 32), wobei das Bild (50) wenigstens einen Teil eines realen Objekts (41) beinhaltet,
- Bestimmen eines Umgebungsparametervektors, der deskriptiv für eine oder mehrere Bedingungen der realen Umgebung, an dem Zeitpunkt, an dem das Bild (50) aufgenommen wird, ist,
- Vergleichen des Bildes (50) mit einem Datenmodell (51), welches aus einem Vergleich des Umgebungsparametervektors mit einem Modellparametervektor des Datenmodells (51) erhalten wird, wobei der Modellparametervektor zumindest eine Bedingung der realen Umgebung beschreibt, wie sie durch das Datenmodell (51) dargestellt ist,
- Durchführen eines Trackingverfahrens, um Korrespondenzen zwischen Merkmalen, die mit dem realen Objekt (41) assoziiert sind, und entsprechenden Merkmalen des Datenmodells (51) zu identifizieren,
- Bestimmen einer Pose der Kamera (22, 32) basierend auf einem Ergebnis des Trackingverfahrens, und
- Bestimmen einer Unsicherheit der Pose der Kamera (22, 32) basierend auf einer Differenz zwischen dem Umgebungsparametervektor und dem Modellparametervektor.

2. Verfahren nach Anspruch 1, wobei in dem Trackingverfahren mindestens ein optisches Trackingverfahren verwendet wird, das abhängig von dem Umgebungsparametervektor initialisiert wird.

3. Verfahren nach einem der vorhergehenden Ansprüche, wobei das Trackingverfahren ferner auf Daten von mehreren Trackingsensoren (32, 34-1, 34-2) basiert, die sich hinsichtlich Sensorart unterscheiden, und wobei das Durchführen des Trackingverfahrens eine Wichtung von Daten von wenigstens einem der Trackingsensoren (32, 34-1, 34-2) basierend auf dem Umgebungsparametervektor beinhaltet.

4. Verfahren nach einem der vorhergehenden Ansprüche, wobei das Durchführen des Trackingverfahrens eine Priorisierung von Verfahrens-Teilschritten abhängig von dem Umgebungsparametervektor beinhaltet.

5. Verfahren nach einem der vorhergehenden Ansprüche, wobei der Umgebungsparametervektor basierend auf mindestens einer oder mehreren der folgenden Informationen bestimmt wird: Daten, die eine Tageszeit angeben; Daten, die eine Jahreszeit angeben; Daten, die eine Wetterbedingung angeben; Daten, die einen Mondstand angeben; Daten, die eine Bedingung angeben, die mit der Belaubung von Bäumen assoziiert ist; Daten, die die Höhe über dem Meer angeben; Daten, die eine öffentliche Veranstaltungen angeben; Daten, die eine Verkehrslage angeben; Daten, die eine Position angeben; Daten, die eine Orientierung in einem Weltkoordinatensystem angeben; und Daten, die einen Wartungszustand der Kamera angeben.

6. Verfahren nach einem der vorhergehenden Ansprüche, bei welchem der Umgebungsparametervektor die Erstellung des Datenmodells beeinflusst, insbesondere die Erstellung von Merkmals-detektoren und -descriptoren beeinflusst.

7. Verfahren nach einem der vorhergehenden Ansprüche, bei welchem das Datenmodell aus einer Anzahl von Einzelmodellen extrahiert wird, welches eine Schnittmenge von Informationen enthält, welche in mehreren Umgebungssituationen vorkommen.

8. Verfahren nach Anspruch 7, bei dem das Datenmodell ein virtuelles 3D-Modell der realen Umgebung ist.

9. Verfahren nach Anspruch 8, bei dem das 3D-Modell mit Texturen belegt ist, welche zuvor von Umgebungssituations-spezifischen Eigenschaften befreit wurde.

10. Verfahren nach einem der Ansprüche 8 oder 9, bei dem das Durchführen des Trackingverfahrens Projizieren des 3D-Modells mit unterschiedlichen Lichtsituationen auf eine Bildebene beinhaltet.

11. Vorrichtung umfassend:
eine Kamera (22, 32),
einen Prozessor, und
einen Speicher, der Anweisungen, die durch den Prozessor ausführbar sind, speichert, zum:
- Empfangen eines Bildes (50) einer realen Umgebung von der Kamera (22, 32), wobei das Bild (50) wenigstens einen Teil eines realen Objekts (41) beinhaltet,
- Bestimmen eines Umgebungsparametervektors, der deskriptiv für eine oder mehrere Bedingungen der realen Umgebung, an dem Zeitpunkt, an dem das Bild (50) aufgenommen wird, ist,
- Vergleichen des Bildes (50) mit einem Datenmodell (51), welches aus einem Vergleich des Umgebungsparametervektors mit einem Modellparametervektor des Datenmodells (51) erhalten wird, wobei der Modellparametervektor zumindest eine Bedingung der realen Umgebung beschreibt, wie sie durch das Datenmodell (51) dargestellt ist,
- Durchführen eines Trackingverfahrens, um Korrespondenzen zwischen Merkmalen, die mit dem realen Objekt (41) assoziiert sind, und entsprechenden Merkmalen des Datenmodells (51) zu identifizieren,
- Bestimmen einer Pose der Kamera (22, 32) basierend auf einem Ergebnis des Trackingverfahrens, und
- Bestimmen einer Unsicherheit der Pose der Kamera (22, 32) basierend auf einer Differenz zwischen dem Umgebungsparametervektor und dem Modellparametervektor.

12. Vorrichtung nach Anspruch 11, wobei das Trackingverfahren ferner auf Daten von mehreren Trackingsensoren (32, 34-1, 34-2) basiert, die sich hinsichtlich Sensorart unterscheiden, und wobei das Durchführen des Trackingverfahrens eine Wichtung von Daten von wenigstens einem der Trackingsensoren (32, 34-1, 34-2) basierend auf dem Umgebungsparametervektor beinhaltet.

13. Vorrichtung nach einem der Ansprüche 11 bis 12, wobei das Durchführen des Trackingverfahrens eine Priorisierung von Verfahrens-Teilschritten abhängig von dem Umgebungsparametervektor beinhaltet.

14. Vorrichtung nach einem der Ansprüche 11 bis 13, wobei der Umgebungsparametervektor basierend auf mindestens einer oder mehreren der folgenden Informationen bestimmt wird: Daten, die eine Tageszeit angeben; Daten, die eine Jahreszeit angeben; Daten, die eine Wetterbedingung angeben; Daten, die einen Mondstand angeben; Daten, die eine Bedingung angeben, die mit der Belaubung von Bäumen assoziiert ist; Daten, die die Höhe über dem Meer angeben; Daten, die eine öffentliche Veranstaltungen angeben; Daten, die eine Verkehrslage angeben; Daten, die eine Position angeben; Daten, die eine Orientierung in einem Weltkoordinatensystem angeben; und Daten, die einen Wartungszustand der Kamera angeben.

15. Computerlesbare Speichervorrichtung, die Anweisungen speichert, die durch einen oder mehrere Prozessoren ausgeführt werden können, um das Verfahren nach irgendeinem der Ansprüche 1 bis 10 durchzuführen.

## Claims

1. A method for determining a pose of a camera (22, 32) relative to a real environment (40), said method comprising the following steps:
- receiving an image (50) of the real environment from the camera (22, 32), the image (50) containing at least a part of a real object (41),
- determining an environment parameter vector descriptive of one or more conditions of the real environment at a time at which the image (50) is captured,
- comparing the image (50) to a data model (51) obtained based on a comparison of the environment parameter vector to a model parameter vector of the data model (51), the model parameter vector describing at least one condition of the real environment as represented by the data model (51),
- performing a tracking method to identify correspondences between features associated with the real object (41) and corresponding features of the data model (51),
- determining a pose of the camera (22, 32) based on a result of the tracking method, and
- determining an uncertainty of the pose of the camera (22, 32) based on a difference between the environment parameter vector and the model parameter vector.

2. The method of claim 1,
wherein the tracking method makes use of at least one optical tracking method that is initialized in accordance with the environment parameter vector.

3. The method of any of the preceding claims,
wherein the tracking method is based further on data from several tracking sensors (32, 34-1, 34-2) that are different with respect to sensor type, and wherein performing the tracking method includes weighting data from at least one of the tracking sensors (32, 34-1, 34-2) based on the environment parameter vector.

4. The method of any of the preceding claims,
wherein performing the tracking method includes prioritization of partial method steps in accordance with the environment parameter vector.

5. The method of any of the preceding claims,
wherein, the environment parameter vector is determined based on one or more of the following information: data indicating a time of the day; data indicating a time of year; data indicating a weather condition; data indicating a position of the moon; data indicating a condition associated with foliage of trees; data indicating an altitude above sea level; data indicating a public event; data indicating a traffic condition; data indicating a position; data indicating an orientation in a world coordinate system; and data indicating a maintenance status of the camera.

6. The method of any of the preceding claims,
wherein the environment parameter vector influences generating of the data model, in particular influences generating of feature detectors and descriptors.

7. The method of any of the preceding claims,
wherein the data model is extracted from a number of individual models, said data model containing an intersection of information present in several environmental situations.

8. The method of claim 7,
wherein the data model includes a virtual 3D model of the real environment.

9. The method of claim 8,
wherein the 3D model has textures applied thereto which was freed from environmental situation-specific properties before.

10. The method of any of claims 8 or 9,
wherein performing the tracking method includes projecting the 3D model to an image plane with different light situations.

11. An apparatus comprising:
a camera (22, 32),
a processor, and
a memory storing instructions executable by the processor to:
- receive an image (50) of a real environment from the camera (22, 32), the image (50) containing at least a part of a real object (41),
- determine an environment parameter vector descriptive of one or more conditions of the real environment at a time at which the image (50) is captured,
- compare the image (50) to a data model (51) obtained based on a comparison of the environment parameter vector to a model parameter vector of the data model (51), the model parameter vector describing at least one condition of the real environment as represented by the data model (51),
- perform a tracking method to identify correspondences between features associated with the real object (41) and corresponding features of the data model (51),
- determine a pose of the camera (22, 32) based on a result of the tracking method, and
- determine an uncertainty of the pose of the camera (22, 32) based on a difference between the environment parameter vector and the model parameter vector.

12. The apparatus of claim 11,
wherein the tracking method is based further on data from several tracking sensors (32, 34-1, 34-2) that are different with respect to sensor type, and wherein performing the tracking method includes weighting data from at least one of the tracking sensors (32, 34-1, 34-2) based on the environment parameter vector.

13. The apparatus of any of claims 11 to 12,
wherein performing the tracking method includes prioritization of partial method steps in accordance with the environment parameter vector.

14. The apparatus of any of claims 11 to 13,
wherein, the environment parameter vector is determined based on one or more of the following information: data indicating a time of the day; data indicating a time of year; data indicating a weather condition; data indicating a position of the moon; data indicating a condition associated with foliage of trees; data indicating an altitude above sea level; data indicating a public event; data indicating a traffic condition; data indicating a position; data indicating an orientation in a world coordinate system; and data indicating a maintenance status of the camera.

15. A computer readable storage device storing instructions executable by one or more processors to perform the method of any of claims 1 to 10.

## Revendications

1. Procédé de détermination d'une pose d'une caméra (22, 32) par rapport à un environnement réel (40), comprenant les étapes suivantes :
- réception d'une image (50) de l'environnement réel par la caméra (22, 32), l'image (50) contenant au moins une partie d'un objet réel (41),
- détermination d'un vecteur paramétrique d'environnement qui est descriptif d'une ou plusieurs conditions de l'environnement réel au moment où l'image (50) est prise,
- comparaison de l'image (50) avec un modèle de données (51) qui est obtenu par une comparaison du vecteur paramétrique d'environnement avec un vecteur paramétrique de modèle du modèle de données (51), le vecteur paramétrique de modèle décrivant au moins une condition de l'environnement réel telle qu'elle est représentée par le modèle de données (51),
- exécution d'une procédure de tracking pour identifier des correspondances entre des caractéristiques qui sont associées à l'objet réel (41) et des caractéristiques correspondantes du modèle de données (51),
- détermination d'une pose de la caméra (22, 32) sur la base d'un résultat d'une procédure de tracking, et
- détermination d'une incertitude de la pose de la caméra (22, 32) sur la base d'une différence entre le vecteur paramétrique d'environnement et le vecteur paramétrique de modèle.

2. Procédé selon la revendication 1, dans la procédure de tracking étant utilisée au moins une procédure de tracking optique qui est initialisée en fonction du vecteur paramétrique d'environnement.

3. Procédé selon une des revendications précédentes, la procédure de tracking étant basée en outre sur des données de plusieurs capteurs de tracking (32, 34-1, 34-2) qui se différencient sur le plan du type de capteur, et l'exécution de la procédure de tracking contenant une pondération de données d'au moins un des capteurs de tracking (32, 34-1, 34-2) sur la base du vecteur paramétrique d'environnement.

4. Procédé selon une des revendications précédentes, l'exécution de la procédure de tracking contenant une priorisation de sous-étapes de procédure en fonction du vecteur paramétrique d'environnement.

5. Procédé selon une des revendications précédentes, le vecteur paramétrique d'environnement étant déterminé sur la base d'au moins une ou plusieurs des informations suivantes : données qui indiquent une heure du jour ; données qui indiquent une saison ; données qui indiquent une condition météorologique ; données qui indiquent une phase de lune ; données qui indiquent une condition qui est associée à la présence de feuilles sur les arbres ; données qui indiquent l'altitude au-dessus de la mer ; données qui indiquent une manifestation publique ; données qui indiquent un état de la circulation ; données qui indiquent une position ; données qui indiquent une orientation dans un système de coordonnées universelles ; et données qui indiquent un état d'entretien de la caméra.

6. Procédé selon une des revendications précédentes, dans lequel le vecteur paramétrique d'environnement influence l'établissement du modèle de données, en particulier l'établissement de détecteurs et de descripteurs de caractéristiques.

7. Procédé selon une des revendications précédentes, dans lequel le modèle de données est extrait d'une pluralité de modèles individuels, ledit modèle de données contenant une intersection d'informations qui surviennent dans plusieurs situations environnementales.

8. Procédé selon la revendication 7, dans lequel le modèle de données est un modèle 3D virtuel de l'environnement réel.

9. Procédé selon la revendication 8, dans lequel le modèle 3D est muni de textures qui ont préalablement été débarrassées de propriétés spécifiques à des situations environnementales.

10. Procédé selon une des revendications 8 ou 9, dans lequel l'exécution de la procédure de tracking contient une projection du modèle 3D avec des situations lumineuses différentes sur un plan d'image.

11. Dispositif comprenant :
une caméra (22, 32),
un processeur, et
une mémoire qui stocke des instructions à exécuter par le processeur, pour :
- la réception d'une image (50) d'un environnement réel par la caméra (22, 32), l'image (50) contenant au moins une partie d'un objet réel (41),
- la détermination d'un vecteur paramétrique d'environnement qui est descriptif d'une ou plusieurs conditions de l'environnement réel au moment où l'image (50) est prise,
- la comparaison de l'image (50) avec un modèle de données (51) qui est obtenu par une comparaison du vecteur paramétrique d'environnement avec un vecteur paramétrique de modèle du modèle de données (51), le vecteur paramétrique de modèle décrivant au moins une condition de l'environnement réel telle qu'elle est représentée par le modèle de données (51),
- l'exécution d'une procédure de tracking pour identifier des correspondances entre des caractéristiques qui sont associées à l'objet réel (41) et des caractéristiques correspondantes du modèle de données (51),
- la détermination d'une pose de la caméra (22, 32) sur la base d'un résultat d'une procédure de tracking, et
- la détermination d'une incertitude de la pose de la caméra (22, 32) sur la base d'une différence entre le vecteur paramétrique d'environnement et le vecteur paramétrique de modèle.

12. Procédé selon la revendication 11, la procédure de tracking étant basée en outre sur des données de plusieurs capteurs de tracking (32, 34-1, 34-2) qui se différencient sur le plan du type de capteur, et l'exécution de la procédure de tracking contenant une pondération de données d'au moins un des capteurs de tracking (32, 34-1, 34-2) sur la base du vecteur paramétrique d'environnement.

13. Dispositif selon une des revendications 11 à 12, l'exécution de la procédure de tracking contenant une priorisation de sous-étapes de procédure en fonction du vecteur paramétrique d'environnement.

14. Dispositif selon une des revendications 11 à 13, le vecteur paramétrique d'environnement étant déterminé sur la base d'au moins une ou plusieurs des informations suivantes : données qui indiquent une heure du jour ; données qui indiquent une saison ; données qui indiquent une condition météorologique ; données qui indiquent une phase de lune ; données qui indiquent une condition qui est associée à la présence de feuilles sur les arbres ; données qui indiquent l'altitude au-dessus de la mer ; données qui indiquent une manifestation publique ; données qui indiquent un état de la circulation ; données qui indiquent une position ; données qui indiquent une orientation dans un système de coordonnées universelles ; et données qui indiquent un état d'entretien de la caméra.

15. Dispositif de mémorisation lisible par ordinateur, lequel stocke des instructions qui peuvent être exécutées par un ou plusieurs processeurs afin d'exécuter le procédé selon l'une quelconque des revendications 1 à 10.
